# EUROPÄISCHE PATENTSCHRIFT

(11) **EP 1 161 807 B1**
(45) Veröffentlichungstag und Bekanntmachung des Hinweises auf die Patenterteilung: **08.10.2003**
(21) Anmeldenummer: 00915107.7
(22) Anmeldetag: 15.02.2000
(51) Int. Cl.: H04L 1/00

(54) **DATENÜBERTRAGUNGSVORRICHTUNG UND -VERFAHREN**
DATA TRANSMISSION DEVICE AND METHOD
PROCEDE ET DISPOSITIF DE TRANSMISSION DE DONNEES

(30) Priorität: 06.03.1999 DE 19909921
(43) Veröffentlichungstag der Anmeldung: 12.12.2001
(73) Patentinhaber: ROBERT BOSCH GMBH, 70442 Stuttgart (DE)
(72) Erfinder: KOWALEWSKI, Frank, D-38228 Salzgitter (DE)
(86) Internationale Anmeldenummer: DE0000430
(87) Internationale Veröffentlichungsnummer: WO00054449

(56) Entgegenhaltungen:
- EP-A- 0 615 352
- WO-A-98/37594
- MATSUOKA H ET AL: "ADAPTIVE MODULATION SYSTEM WITH VARIABLE CODING RATE CONCATENATED CODE FOR HIGH QUALITY MULTI-MEDIA COMMUNICATION SYSTEMS" PROCEEDINGS OF THE VEHICULAR TECHNOLOGY CONFERENCE, IEEE, Bd. 1, 28. April 1996 (1996-04-28), Seiten 487-491, XP000594323 New York, Vereinigte Staaten ISBN: 0-7803-3158-3
- YUEN E ET AL: "VARIABLE RATE SPEECH AND CHANNEL CODING FOR MOBILE COMMUNICATION" PROCEEDINGS OF THE VEHICULAR TECHNOLOGY CONFERENCE, IEEE, Bd. 3, 8. Juni 1994 (1994-06-08), Seiten 1709-1713, XP000497714 New York, Vereinigte Staaten ISBN: 0-7803-1928-1

## Beschreibung

### Stand der Technik

Die vorliegende Erfindung betrifft eine Datenübertragungsvorrichtung, welche sich mehrerer Datenübertragungstechniken und/oder mehrerer Datenübertragungsparameter einer oder mehrerer Datenübertragungstechniken bedienen kann, mit mindestens einer Sendeeinrichtung und einer Empfangseinrichtung, welche über mindestens einen Datenübertragungskanal miteinander kommunizieren können, sowie ein entsprechendes Datenübertragungsverfahren.

Obwohl auf beliebige Datenübertragungstechniken anwendbar, werden die vorliegende Erfindung sowie die ihr zugrundeliegende Problematik in bezug auf die Mobilfunktechnik erläutert.

Aus der EP 0 615 352 A ist ein Funktelefonsystem bekannt, das eine Trainingssequenz variabler Länge verwendet. Dabei kann entweder die Länge eines Schutzabstandes und eines Referenzteils bei gleichbleibender Gesamtlänge der Trainingssequenz variiert werden oder die Gesamtlänge der Trainingssequenz. Die Trainingssequenz wird dabei in Abhängigkeit der Impulsantwort des Funkkanals in ihrer Länge variiert.

Aus der Druckschrift Matsuoka H. et al: "Adaptive modulation system with variable coding rate concatenated code for high quality multi-media communication systems" proceedings of the vehicular technology conference, IEEE, Bd. 1, 28. April 1996 (1996-04-28), Seiten 487-491, XP000594323 New York, Vereinigte Staaten ISBN: 0-7803-3158-3) ist ein adaptives Modulationssystem mit einem verketteten Code für mobile Kommunikation bekannt, um hohe Qualität, hohe Bitratenübertragung in Rayleigh-Fading Umgebungen zu erreichen. Das vorgeschlagene System steuert die Codierrate des inneren Faltungscodes, die Symbolrate und das Modulationsniveau adaptiv gemäß den aktuellen Fadingkanalbedingungen.

Aus der Druckschrift Yuen E. et al: "Variable rate speech and channel coding for mobile communication" proceedings of the vehicular technology conference, IEEE, Bd. 3, 8. Juni 1994 (1994-06-08), Seiten 1709-1713, XP000497714 New York, Vereinigte Staaten ISBN: 0-7803-1928-1) ist ein adaptives Codiersystem bekannt das die Ratenzuweisung den aktuellen Kanalbedingungen anpasst. Dabei werden zwei Arten von variablen Sprachratencodierern betrachtet. Ein Kanalschätzer wird beim Empfänger verwendet, um sowohl die Kurzzeit als auch die Langzeitfadingbedingung im Kanal zu verfolgen. Die geschätzte Kanalzustandsinformation wird dann verwendet, um die Ratenzuweisung zwischen dem Sprach- und dem Kanalcoder zu variieren. Dies wird durch Senden eines geeigneten Ratenanpassungsbefehls durch einen Feedbackkanal erreicht.

Im Stand der Technik gibt es verschiedene Technologien bzw. Techniken zur Mehrkanal-Funkübertragung, und zwar insbesondere TDMA (Time Division Multiple Access), z.B. GSM (Global System for Mobile Telecommunications) oder UMTS (Universal Mobil Telecommunication System), FDMA (Frequenzy Division Multiple Access), z.B. DECT (Digital Enhanced Telecommunication), GSM (Global System for Mobile Teleeommunications), DAB (Digital Audio Broadcasting) sowie CDMA (Code Division Multiple Access) (IS95, UMTS).

Störende Interferenzen, welche bei diesen verschiedenen Techniken auftreten können, werden, wenn überhaupt, üblicherweise auf verschiedene Arten behandelt. Insbesondere sind eine Eliminierung von Intersymbolinterferenz (ISI), eine Eliminierung von Mehrfachnutzerinterferenz (MAI), eine Eliminierung im Empfänger, beispielsweise durch Entzerrer oder Multi User bzw. Joint Detection-Verfahren, sowie eine Eliminierung im Sender durch Pre-Rake oder gemeinsame Vorentzerrung bekannt. Siehe dazu K. D. Kammeyer, "Nachrichtenübertragung", 2. Auflage, Reihe Informationstechnik, Teubner, Stuttgart, 1996, sowie A. Klein, G. K. Kaleh und P. W. Baier, "Zero Forcing and Minimum Mean-Square-Error Equalization for Multiuser Detection in Code-Division Multiple-Access Channels", IEEE Trans. Vehic. Tech., Band 45 (1996), 276-287, sowie R. Esmailzadeh und M. Nakagawa, "Pre-Rake Diversity Combination for Direct Sequence Spread Spectrum Mobile Communications Systems", IEICE Trans. Comm., Band E76-B (1993), 1008-1015.

Weiterhin werden üblicherweise verschiedene Parameter bei verschiedenen Übertragungsbedingungen eingesetzt, beispielsweise im UMTS TDD Modus, wo verschiedene Burst-Typen je nach maximaler Kanalverzögerung eingesetzt werden. Siehe dazu UMTS-L1 expert group: "UTRA Physical Layer Description, TDD parts, V 0.2.0".

Als nachteilhaft bei den bekannten Ansätzen hat sich herausgestellt, daß eine Übertragungstechnik mit einem bestimmten Parametersatz nur unter bestimmten Übertragungsbedingungen bzw. Übertragungseigenschaften des Datenübertragungskanals vorteilhafter ist als eine andere.

Daher kann es passieren, daß eine unnötig geringe Übertragungsqualität unter bestimmten Übertragungsbedingungen vorherrscht bzw. eine unnötig starke Abhängigkeit der Übertragungsqualität von den Übertragungsbedingungen vorherrscht.

Wünschenswert wäre also, ein Datenübertragungssystem zu schaffen, welches stets eine optimale Übertragungsqualität gewährleisten kann, und zwar unabhängig davon ob die Datenübertragungsbedingungen veränderlich oder konstant sind.

### VORTEILE DER ERFINDUNG

Die erfindungsgemäße Datenübertragungsvorrichtung mit den Merkmalen des Anspruchs 1 und das entsprechende Datenübertragungsverfahren gemäß Anspruch 11 weisen gegenüber den bekannten Lösungsansätzen den Vorteil auf, daß es damit möglich ist, verschiedenen Übertragungseigenschaften gerecht zu werden.

Mit anderen Worten ist eine Verbesserung der Datenübertragung bei veränderlichen Übertragungsbedingungen möglich bzw. eine von den Übertragungsbedingungen weitgehend unabhängige Datenübertragungsqualität. Geht man von gleichbleibenden Übertragungsbedingungen aus, so lässt sich eine gleiche oder verbesserte Übertragungsqualität erzielen.

Die der vorliegenden Erfindung zugrundeliegende Idee besteht darin, dass eine Bestimmungseinrichtung zum Bestimmen der Übertragungseigenschaften des oder der Datenübertragungskanäle für mehrere Datenübertragungstechniken und/oder mehrere Datenübertragungsparameter einer oder mehrerer Datenübertragungstechniken und eine Auswahleinrichtung zum Auswählen einer bestimmten Datenübertragungstechnik mit bestimmten Datenübertragungsparametern entsprechend dem Ergebnis der Bestimmung zusätzlich vorgesehen sind.

Die Bestimmungseinrichtung ist derart gestaltet, dass sie die Änderungsgeschwindigkeit des Datenübertragungskanals bestimmt.

Die Auswahleinrichtung trifft die Auswahl derart, dass Interferenzen in der Empfangseinrichtung eliminiert werden, wenn die Änderungsgeschwindigkeit des Datenübertragungskanals einen vorbestimmten Wert überschreitet, und das Interferenzen in der Sendeeinrichtung eliminiert werden, wenn die Änderungsgeschwindigkeit des Datenkanals einen vorbestimmten Wert unterschreitet.

In den Unteransprüchen finden sich vorteilhafte Weiterbildungen und Verbesserungen der in Anspruch 1 angegebenen Datenübertragungsvorrichtung bzw. des in Anspruch 11 angegebenen Datenübertragungsverfahrens.

Gemäß einer bevorzugten Weiterbildung ist die Auswahleinrichtung in der Sendeeinrichtung vorgesehen.

Gemäß einer weiteren bevorzugten Weiterbildung ist die Auswahleinrichtung in der Empfangseinrichtung vorgesehen.

Gemäß einer weiteren bevorzugten Weiterbildung ist der Datenübertragungskanal ein Funkkanal.

Gemäß einer weiteren bevorzugten Weiterbildung ist die Bestimmungseinrichtung derart gestaltet, dass sie die maximale Verzögerung des Datenübertragungskanals bestimmt.

Gemäß einer weiteren bevorzugten Weiterbildung trifft die Auswahleinrichtung die Auswahl derart, dass sie eine Übertragungstechnik mit einer bestimmten Burststruktur in Abhängigkeit von der ermittelten maximalen Verzögerung des Datenübertragungskanals auswählt.

Gemäß einer weiteren bevorzugten Weiterbildung trifft die Auswahleinrichtung die Auswahl derart, dass sie eine Übertragungstechnik mit einem bestimmten Referenzsignal in Abhängigkeit von der ermittelten maximalen Verzögerung des Datenübertragungskanals und/oder ermittelten Änderungsgeschwindigkeit auswählt

Gemäß einer weiteren bevorzugten Weiterbildung ist die Datenübertragungsvorrichtung eine Mobilfunkeinrichtung, vorzugsweise ein Mobiltelefon.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung einer Datenübertragungsvorrichtung als erstes Ausführungsbeispiel der vorliegenden Erfindung;
- Fig. 2: eine schematische Darstellung einer Datenübertragungsvorrichtung als zweites Ausführungsbeispiel der vorliegenden Erfindung;
- Fig. 3: eine schematische Darstellung einer Datenübertragungsvorrichtung als drittes Ausführungsbeispiel der vorliegenden Erfindung;
- Fig. 4: Burststrukturen zur Schätzung kurzer und langer Kanäle; und
- Fig. 5: Burststrukturen zur Schätzung langsam und schnell veränderlicher Kanäle.

### BESCHREIBUNG DER AUSFÜHRUNGSBEISPIELE

In den Figuren bezeichnen gleiche Bezugszeichen gleiche oder funktionsgleiche Bestandteile.

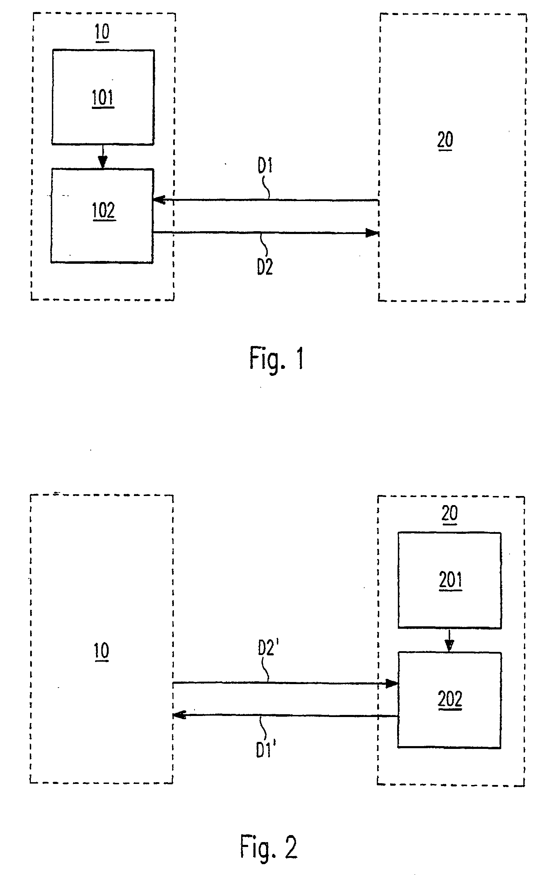

Fig. 1 zeigt eine schematische Darstellung einer Datenübertragungsvorrichtung als erstes Ausführungsbeispiel der vorliegenden Erfindung.

In Figur 1 bezeichnen 10 einen Sender, 20 einen Empfänger, 101 eine Bestimmungseinrichtung zum Bestimmen der Übertragungseigenschaften des Übertragungskanals, 102 eine Auswahleinrichtung zum Auswählen einer bestimmten Datenübertragungstechnik mit bestimmten Datenübertragungsparametern sowie D1 und D2 Datennachrichten.

Gemäß der Darstellung von Fig. 1 sendet zunächst der Sender 10 eine Anfrage an den Empfänger 20 und fordert diesen auf, mit verschiedenen Übertragungstechniken bzw. -parametern zu antworten. Daraufhin sendet der Empfänger 20 die Datennachricht D1 zum Sender 10 und teilt damit mit, welche Techniken und zugehörige Parameter unterstützt werden.

Daraufhin bestimmt die Bestimmungseinrichtung 101 die Übertragungseigenschaften des oder der Datenübertragungskanäle, und die Auswahleinrichtung 102 wählt eine bestimmte Datenübertragungstechnik mit bestimmten Datenübertragungsparametern entsprechend dem Ergebnis der Bestimmung.

Der Sender 10 teilt dem Empfänger 20 die gewählte Technik und zugehörigen Parameter in der Datennachricht D2 mit.

Fig. 2 zeigt eine schematische Darstellung einer Datenübertragungsvorrichtung als zweites Ausführungsbeispiel der vorliegenden Erfindung.

In Figur 2 bezeichnen zusätzlich zu den bereits eingeführten Bezugszeichen 201 eine Bestimmungseinrichtung zum Bestimmen der Übertragungseigenschaften des Datenübertragungskanals, 202 eine Auswahleinrichtung zum Auswählen einer bestimmten Datenübertragungstechnik mit bestimmten Datenübertragungsparametern sowie D1' und D2' Datennachrichten.

Gemäß der Darstellung von Fig. 2 sendet zunächst der Empfänger 20 eine Anfrage an den Sender 10 und fordert diesen auf, mit verschiedenen Übertragungstechniken bzw. -parametern zu antworten. Daraufhin sendet der Sender 10 die Datennachricht D2' zum Empfänger 20 und teilt damit mit, welche Techniken und zugehörige Parameter unterstützt werden.

Daraufhin bestimmt die Bestimmungseinrichtung 201 die Übertragungseigenschaften des oder der Datenübertragungskanäle, und die Auswahleinrichtung 202 wählt eine bestimmten Datenübertragungstechnik mit bestimmten Datenübertragungsparametern entsprechend dem Ergebnis der Bestimmung.

Der Empfänger 20 teilt dem Sender 10 die gewählte Technik und zugehörigen Parameter in der Datennachricht D1' mit.

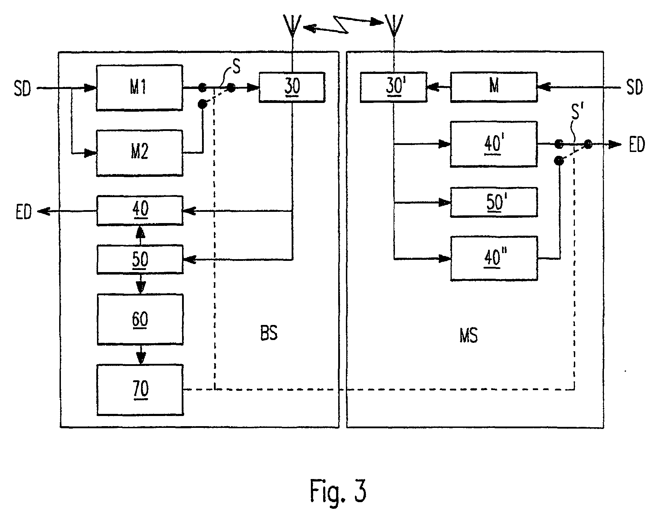

Fig. 3 zeigt eine schematische Darstellung einer Datenübertragungsvorrichtung als drittes Ausführungsbeispiel der vorliegenden Erfindung.

Die Datenübertragungsvorrichtung als Ausführungsform der vorliegenden Erfindung nach Fig. 3 ist ein zelluläres Funkübertragungssystem, bei dem eine Übertragung von einer Basisstation BS zu mehren Mobilstationen MS in der Vorwärtsstrecke stattfindet sowie eine Übertragung von den mehreren Mobilstationen MS zur Basisstation BS in der Rückwärtsstrecke. Die Trennung der Datenströme verschiedener Benutzer (Mobilstationen MS) findet beispielsweise durch Code-Vielfachzugriff (CDMA) statt.

Bei dem dargestellten TDD-Funkübertragungssystem liegen die Vorwärts- und Rückwärtstrecke im selben Frequenzband. Die Trennung von Vorwärts- und Rückwärtsstrecke erfolgt zeitlich durch abwechselnde Übertragung von Sendebursts in der Vorwärts- und Rückwärtsstrecke.

Die Interferenzeliminierung der Vorwärtstrecke findet wahlweise im Sender oder Empfänger statt, beispielsweise durch Eliminierung im Sender durch gemeinsame Vorentzerrung oder durch Eliminierung im Empfänger durch gemeinsame Detektion entsprechend Klein et al. (s.o.).

Ein Beispiel für die Wahl der Interferenzeliminierungstechnik der Vorwärtsstrecke liegt in der Bestimmung der Änderungsgeschwindigkeit des Funkkanals durch Vergleich aufeinanderfolgender Kanalschätzungen in der Basisstation und eine Interferenzeliminierung durch gemeinsame Vorentzerrung im Sender, wenn die Änderungsgeschwindigkeit unter einem bestimmten Schwellwert liegt, sowie der Eliminierung durch gemeinsame Detektion im Empfänger, wenn die Änderungsgeschwindigkeit über dem Schwellwert liegt.

In Figur 3 bezeichnen SD Sendedaten, ED Empfangsdaten, 30 und 30' Duplexer, M1 ein Modulator ohne Vorentzerrung, M2 einen Modulator mit Vorentzerrung, M einen Modulator, 40 und 40' und 40'' einen Detektor, 50 und 50' einen Kanalschätzer, 60 eine Bestimmungseinrichtung und 70 eine Entscheidungseinrichtung bzw. Auswahleinrichtung. S und S' bezeichnen durch die Entscheidungseinrichtung 70 umstellbare Schalter.

Die Basisstation BS hat einen Sendeteil mit den Modulatoren M1 und M2 ohne bzw. mit Vorentzerrung und einen Empfangsteil mit dem Detektor 40 und dem Kanalschätzer 50 sowie einem Entscheidungsteil zur Entscheidung zwischen Vorentzerrung und gemeinsamer Detektion bestehend aus der Bestimmungseinrichtung 60 und der Entscheidungseinrichtung 70. Der Auswahlschalter S dient zur Wahl des Modulators M1 bzw. M2. Der Auswahlschalter S wird durch die Entscheidungseinrichtung 70 gesteuert.

Die Mobilstation MS hat einen Sendeteil mit dem Modulator M und einen Empfangsteil mit dem Kanalschätzer 50' sowie dem Detektor 40' zur gemeinsamen Detektion und dem Detektor 40'' zur einfachen Detektion.

Die Entscheidungseinrichtung 70 in der Basisstation BS wählt entsprechend dem Resultat des Kanalschätzers 50 und der Bestimmungseinrichtung 60 entweder keine Vorentzerrung in der Basisstation BS und gemeinsame Detektion in der Mobilstation MS oder Vorentzerrung in der Basisstation BS und einfache Detektion in der Mobilstation MS. Die von der Entscheidungseinrichtung 70 der Basisstation BS getroffene Entscheidung wird der Mobilstation MS über die Funkschnittstelle mitgeteilt.

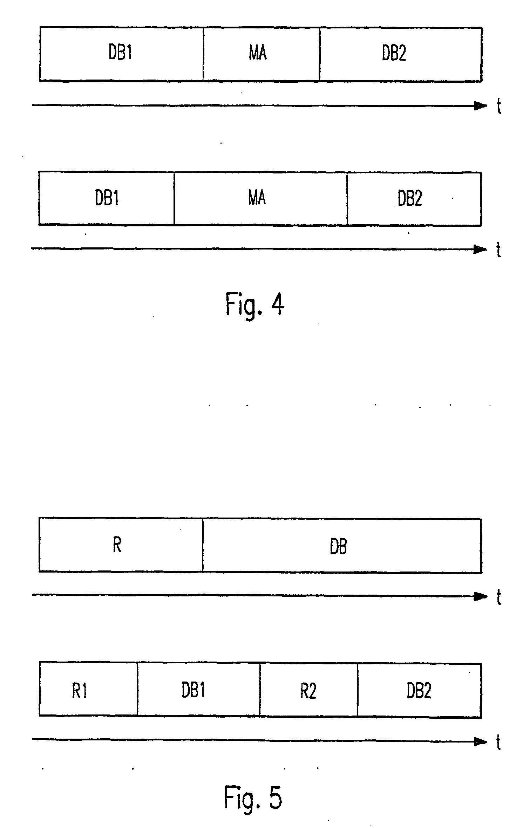

Fig. 4 zeigt Burststrukturen zur Schätzung kurzer und langer Kanäle.

Ein weiteres Beispiel für ein zelluläres Funkübertragungssystem als Ausführungsbeispiel der erfindungsgemäßen Datenübertragungsvorrichtung sieht eine blockweise Datenübertragung in einer Datenburststruktur vor, wie in Figur 4 veranschaulicht, in der DB1 einen ersten Datenblock, DB2 einen zweiten Datenblock und MA eine dazwischengeschaltete Midamble bezeichnet. t stellt die von links nach rechts verlaufende Zeit dar.

Wahlweise gibt es eine von zwei möglichen Burststrukturen in der Rückwärtsstrecke, nämlich eine Burststruktur mit langen Datenblöcken und einer kurzen Midamble sowie eine Burststruktur mit kurzen Datenblöcken und einer langen Midamble. Die Wahl der Datenburststruktur wird auf Grund einer Bestimmung der maximalen Kanalverzögerung durch die Mobilstation in der Vorwärtsstrecke getroffen.

Die Wahl der Burststruktur der Rückwärtsstrecke wird entsprechend der bestimmten maximalen Verzögerung getroffen, nämlich eine lange Midamble MA bei langen Verzögerungen und eine kurze Midamble bei kurzen Verzögerungen.

Welcher Bursttyp gesendet wurde, wird im Empfänger anhand des empfangenen Signals bestimmt. Dieses Ausführungsbeispiel ist insbesondere im UMTS TDD-Modus anwendbar.

Fig. 5 zeigt Burststrukturen zur Schätzung langsam und schnell veränderlicher Kanäle.

Bei diesem Ausführungsbeispiel in Form eines zellulären Funkübertragungssystems findet eine blockweise Datenübertragung in einer Datenburststruktur statt. Das Referenzsignal R bzw. R1 bzw. R2 und der Datenblock DB bzw. DB1 bzw. DB2 werden zeitlich aufeinanderfolgend gesendet. Wahlweise wird eine von zwei möglichen Burststrukturen verwendet, nämlich ein langes Referenzsignal R und ein langer Datenblock DB bzw. mehrere kurze Referenzsignale R1, R2, die durch verkleinerte Datenblöcke DB1, DB2 voneinander getrennt sind.

Die Wahl der Burststruktur erfolgt durch Bestimmung der Änderungsgeschwindigkeit des Funkkanals mit Hilfe des Referenzsignals durch Vergleich aufeinanderfolgender Kanalschätzungen in der Basisstation BS oder in der Mobilstation MS.

Der Burst mit dem langen Referenzsignal R wird gewählt, falls die Änderungsgeschwindigkeit des Kanals unter einem bestimmten Schwellwert liegt, und der Burst mit den mehreren kurzen Referenzsignale R1, R2, falls die Änderungsgeschwindigkeit über dem Schwellwert liegt.

Welcher Bursttyp gesendet wurde, wird im Empfänger anhand des empfangenen Signals bestimmt. Auch dieses Ausführungsbeispiel ist für den UMTS-Standard anwendbar.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Bei einem weiteren Ausführungsbeispiel könnte es sich um ein Funkübertragungssystem handeln, das verschiedene Standards unterstützt, beispielsweise eine Übertragung nach dem GSM-Standard und eine Übertragung entsprechend dem USTM-Standard.

Hier könnte eine Bestimmung der Änderungsgeschwindingkeit des Funkkanals und der maximalen Kanalverzögerung vorgesehen sein. Die Wahl der Übertragungstechnik mit den zugehörigen Übertragungsparametern könnte derart erfolgen, daß die Datenübertragungsqualität bei der gemessenen Änderungsgeschwindigkeit und den gemessenen Verzögerungen optimiert wird.

Entgegen der Beschreibung in den obigen Ausführungsbeispielen kann der Sender bzw. Empfänger seiner Gegenstation auch ohne explizite Aufforderung mitteilen, welche Übertragungstechniken bzw. -parameter er unterstützt, z.B. direkt nach der Verbindungsetablierung.

## Patentansprüche

1. Datenübertragungsvorrichtung, welche sich mehrerer Datenübertragungstechniken und/oder mehrerer Datenübertragungsparameter einer oder mehrerer Datenübertragungstechniken bedienen kann, mit mindestens einer Sendeeinrichtung (10) und einer Empfangseinrichtung (20), welche über mindestens einen Datenübertragungskanal miteinander kommunizieren können, wobei eine Bestimmungseinrichtung (101;201) zum Bestimmen der Übertragungseigenschaften des oder der Datenübertragungskanäle für mehrere Datenübertragungstechniken und/oder mehrere Datenübertragungsparameter einer oder mehrerer Datenübertragungstechniken und eine Auswahleinrichtung (102;202) zum Auswählen einer bestimmten Datenübertragungstechnik mit bestimmten Datenübertragungsparametern entsprechend dem Ergebnis der Bestimmung vorgesehen sind, **dadurch gekennzeichnet, dass** die Bestimmungseinrichtung (101;201) derart gestaltet ist, dass sie die Änderungsgeschwmdigkeit des Datenübertragungskanals bestimmt und dass die Auswahleinrichtung (102; 202) die Auswahl derart trifft, dass Interferenzen in der Empfangseinrichtung (20) eliminiert werden, wenn die Änderungsgeschwmdigkeit des Datenübertragungskanals einen vorbestimmten Wert überschreitet, und dass Interferenzen in der Sendeeinrichtung (10) eliminiert werden, wenn die Änderungsgeschwindigkeit des Datenübertragungskanals einen vorbestimmten Wert unterschreitet.

2. Datentibertragungsvorrichtung nach Anspruch 1, **dadurch gekennzeichnet, dass** die Auswahleinrichtung (102; 202) in der Sendeeinrichtung (10) vorgesehen ist.

3. Datenübertragungsvorrichtung nach Anspruch 1, **dadurch gekennzeichnet, dass** die Auswahleinrichtung (102; 202) in der Empfangseinrichtung (20) vorgesehen ist.

4. Datenübertragungsvorrichtung nach einem der vorhergehenden Ansprüche, **dadurch gekennzeichnet, dass** der Datenübertragungskanal ein Funkkanal ist.

5. Datenübertragungsvorrichtung nach einem der vorhergehenden Ansprüche, **dadurch gekennzeichnet, dass** die Bestimmungseinrichtung (101; 201) derart gestaltet ist, dass sie die maximale Verzögerung des Datenübertragungskanals bestimmt.

6. Datenübertragungsvorrichtung nach Anspruch 5, **dadurch gekennzeichnet, dass** die Auswahleinrichtung (102; 202) die Auswahl derart trifft, dass sie eine Übertragungstechnik mit einer bestimmten Burststruktur in Abhängigkeit von der ermittelten maximalen Verzögerung des Datenübertragungskanals auswählt.

7. Datenübertragungsvorrichtung nach einem der vorherigen Ansprüche, **dadurch gekennzeichnet, dass** die Auswahleinrichtung (102; 202) die Auswahl derart trifft, dass sie eine Übertragungstechnik mit einem bestimmten Referenzsignal in Abhängigkeit von der ermittelten maximalen Verzögerung des Datenübertragungskanals und/oder ermittelten Änderungsgeschwindigkeit auswählt.

8. Datenübertragungsvorrichtung nach einem der vorhergehenden Ansprüche, **dadurch gekennzeichnet, dass** sie eine Mobilfunkeinrichtung oder ein Mobiltelefon ist.

9. Datenübertragungsverfahren, welches sich mehrerer Datenübertragungstechniken und/oder mehrerer Datenübertragungsparameter einer oder mehrerer Datenübertragungstechniken bedienen kann, zur Durchführung an mindestens einer Sendeeinrichtung (10) und einer Empfangseinrichtung (20), welche über mindestens einen Datenübertragungskanal miteinander kommunizieren können, wobei die Übertragungseigenschaften des oder der Datenübertragungskanäle für mehrere Datenübertragungstechniken und/oder mehrere Datenübertragungsparameter einer oder mehrerer Datenübertragungstechniken in einem ersten Schritt bestimmt werden und eine bestimmte Datenübertragungstechnik mit bestimmten Datenübertragungsparametern entsprechend dem Ergebnis der Bestimmung in einem zweiten Schritt ausgewählt werden, **dadurch gekennzeichnet, dass** beim ersten Schritt die Änderungsgeschwindigkeit des Datenübertragungskanals bestimmt wird und dass beim zweiten Schritt die Auswahl derart getroffen wird, dass Interferenzen in der Empfangseinrichtung (20) eliminiert werden, wenn die Änderungsgeschwindigkeit des Datenübertragungskanals einen vorbestimmten Wert überschreitet, und dass Interferenzen in der Sendeeinrichtung (10) eliminiert werden, wenn die Änderungsgeschwindigkeit des Datenübertragungskanals einen vorbestimmten Wert unterschreitet.

## Claims

1. Data transmission apparatus which can make use of a plurality of data transmission techniques and/or a plurality of data transmission parameters for one or more data transmission techniques, having at least one transmission device (10) and a reception device (20) which are able to communicate with one another via at least one data transmission channel, where a determination device (101; 201) for determining the transmission properties of the data transmission channel(s) for a plurality of data transmission techniques and/or a plurality of data transmission parameters for one or more data transmission techniques and a selection device (102; 202) for selecting a particular data transmission technique with particular data transmission parameters on the basis of the result of the determination are provided, **characterized in that** the determination device (101; 201) is in a form such that it determines the speed of change of the data transmission channel, and **in that** the selection device (102; 202) makes the selection such that interference in the reception device (20) is eliminated if the speed of change of the data transmission channel exceeds a predetermined value and that interference in the transmission device (10) is eliminated if the speed of change of the data transmission channel is below a predetermined value.

2. Data transmission apparatus according to Claim 1, **characterized in that** the selection device (102; 202) is provided in the transmission device (10).

3. Data transmission apparatus according to Claim 1, **characterized in that** the selection device (102; 202) is provided in the reception device (20).

4. Data transmission apparatus according to one of the preceding claims, **characterized in that** the data transmission channel is a radio channel.

5. Data transmission apparatus according to one of the preceding claims, **characterized in that** the determination device (101; 201) is in a form such that it determines the maximum delay of the data transmission channel.

6. Data transmission apparatus according to Claim 5, **characterized in that** the selection device (102; 202) makes the selection such that it selects a transmission technique with a particular burst structure on the basis of the ascertained maximum delay of the data transmission channel.

7. Data transmission apparatus according to one of the preceding claims, **characterized in that** the selection device (102; 202) makes the selection such that it selects a transmission technique with a particular reference signal on the basis of the ascertained maximum delay of the data transmission channel and/or the ascertained speed of change.

8. Data transmission apparatus according to one of the preceding claims, **characterized in that** it is a mobile radio device or a mobile telephone.

9. Data transmission method, which can make use of a plurality of data transmission techniques and/or a plurality of data transmission parameters for one or more data transmission techniques, to be carried out on at least one transmission device (10) and a reception device (20) which are able to communicate with one another via at least one data transmission channel, where the transmission properties of the data transmission channel(s) are determined for a plurality of data transmission techniques and/or a plurality of data transmission parameters for one or more data transmission techniques in a first step, and a particular data transmission technique with particular data transmission parameters is selected on the basis of the result of the determination in a second step, **characterized in that** the first step involves the speed of change of the data transmission channel being determined, and **in that** the second step involves the selection being made such that interference in the reception device (20) is eliminated if the speed of change of the data transmission channel exceeds a predetermined value and that interference in the transmission device (10) is eliminated if the speed of change of the data transmission channel is below a predetermined value.

## Revendications

1. Dispositif de transmission de données, qui peut utiliser plusieurs techniques de transmission de données et/ou plusieurs paramètres de transmission de données d'une ou de plusieurs techniques de transmission de données, comportant au moins un dispositif d'émission (10) et un dispositif de réception (20), lesquels peuvent communiquer l'un avec l'autre par au moins un canal de transmission de données, dans lequel il est prévu un dispositif de détermination (101, 102) pour la détermination des caractéristiques de transmission du ou des canaux de transmission de données pour plusieurs techniques de transmission de données et/ou plusieurs paramètres de transmission de données d'une ou de plusieurs techniques de transmission de données et un dispositif de sélection (102, 202) pour la sélection d'une technique de transmission de données déterminée ayant des paramètres de transmission de données déterminés en fonction du résultat de la détermination,
**caractérisé en ce que**
le dispositif de détermination (101, 201) est conçu de manière à ce qu'il détermine la vitesse de changement du canal de transmission de données et que le dispositif de sélection (102, 202) effectue la sélection de manière à ce que des interférences soient éliminées dans le dispositif de réception (20) lorsque la vitesse de changement du canal de transmission de données dépasse une valeur prédéterminée, et que des interférences sont éliminées dans le dispositif d'émission (10) lorsque la vitesse de changement du canal de transmission de données n'atteint pas une valeur prédéterminée.

2. Dispositif de transmission de données selon la revendication 1,
**caractérisé en ce que**
le dispositif de sélection (102, 202) est prévu dans le dispositif d'émission (10).

3. Dispositif de transmission de données selon la revendication 1,
**caractérisé en ce que**
le dispositif de sélection (102, 202) est prévu dans le dispositif de réception (20).

4. Dispositif de transmission de données selon l'une quelconque des revendications précédentes,
**caractérisé en ce que**
le canal de transmission de données est un canal radio.

5. Dispositif de transmission de données selon l'une quelconque des revendications précédentes,
**caractérisé en ce que**
le dispositif de détermination (101, 201) est conçu de manière qu'il détermine la temporisation maximale du canal de transmission de données.

6. Dispositif de transmission de données selon la revendication 5,
**caractérisé en ce que**
le dispositif de sélection (102, 202) effectue la sélection de manière à ce qu'il sélectionne une technique de transmission ayant une structure de giclée de signaux déterminée en fonction de la temporisation maximale établie du canal de transmission de données.

7. Dispositif de transmission de données selon l'une quelconque des revendications précédentes,
**caractérisé en ce que**
le dispositif de sélection (102, 202) effectue la sélection de manière à ce qu'il sélectionne une technique de transmission ayant un signal de référence déterminé en fonction de la temporisation maximale établie du canal de transmission de données et/ou de la vitesse de changement établie.

8. Dispositif de transmission de données selon l'une quelconque des revendications précédentes,
**caractérisé en ce qu'**
il est un dispositif de radiotélécommunications mobiles ou un téléphone mobile.

9. Dispositif de transmission de données qui peut utiliser plusieurs techniques de transmission de données et/ou plusieurs paramètres de transmission de données d'une ou de plusieurs techniques de transmission de données, pour exécution sur au moins un dispositif d'émission (10) et un dispositif de réception (20), lesquels peuvent communiquer l'un avec l'autre par au moins un canal de transmission de données, dans lequel les caractéristiques de transmission du ou des canaux de transmission de données pour plusieurs techniques de transmission de données et/ou plusieurs paramètres de transmission de données d'une ou de plusieurs techniques de transmission de données sont déterminées dans une première étape et une technique de transmission de données déterminée ayant des paramètres de transmission de données déterminés en fonction du résultat de la détermination est sélectionnée dans une deuxième étape,
**caractérisé en ce que**
dans la première étape, la vitesse de changement du canal de transmission de données est déterminé et, dans la deuxième étape, la sélection est effectuée de manière à ce que les interférences soient éliminées dans le dispositif de réception (20) lorsque la vitesse de changement du canal de transmission de données dépasse une valeur prédéterminée, et que les interférences sont éliminées dans le dispositif d'émission (10) lorsque la vitesse de changement du canal de transmission de données n'atteint pas une valeur prédéterminée.
